# EUROPEAN PATENT SPECIFICATION

(11) **EP 2 712 336 B1**
(45) Date of publication and mention of the grant of the patent: **05.07.2017**
(21) Application number: 12731684.2
(22) Date of filing: 11.05.2012
(51) Int. Cl.: B23P 21/00, B29C 65/44, B29C 65/48, B29C 65/52, B29C 65/72, B29C 65/78, B29C 65/82, H01M 2/04, H01M 2/12

(54) **APPARATUS AND METHOD FOR ASSEMBLING CAPS**
VORRICHTUNG UND VERFAHREN ZUR MONTAGE VON KAPPEN
APPAREIL ET PROCÉDÉ POUR ASSEMBLER DES COUVERCLES

(30) Priority: 11.05.2011 IT BO20110261
(43) Date of publication of application: 02.04.2014
(73) Proprietor: L.M.P. Group S.r.l., 20067 Paullo (IT)
(72) Inventor: SAMPELLEGRINI, Lorenzo, I-26025 Pandino (IT)
(74) Representative: Conti, Marco
(86) International application number: PCT/IB2012/052363
(87) International publication number: WO 2012/153308

(56) References cited:
- IT-B1- 1 313 376
- US-A1- 2009 118 858

## Description

### Technical Field

This invention relates to a method and an apparatus for assembling caps. In particular, the apparatus is used in the assembly of caps for power storage units (batteries) in which the caps are made by joining a ceramic portion (permeable to gases) and at least one portion made of plastic material. Even more particularly, the apparatus assembles caps using a process for heat sealing the ceramic and plastic portions.

### Background Art

As is known, there are various types of storage units for an electric charge, commonly known as batteries. The majority of such batteries uses a predetermined chemical reaction to generate a passage of electric ions (e-) between an anode and a cathode which are immersed in an electrolytic solution.

The chemical reactions which take place during the battery charging/discharging cycles involve the production of gases, the most common being hydrogen. In terms of construction, prior art batteries have devices designed to allow out the hydrogen caused by the reaction, to prevent the internal pressure from causing the battery to break.

In the prior art that technical purpose is assigned to a cap which closes a hole providing access to the internal reaction chamber. The hole is used for checking the level of electrolytic solution or for refills, if necessary.

There are various types of prior art caps able to prevent the electrolytic solution from coming out of the battery and at the same time allow the reaction gases out. One prior art cap configuration (e.g. from patent document IT1313376) comprises a base, typically made of plastic material, which is attached to the battery at the hole, and an upper body, also called the filter, made of ceramic material whose porosity allows the passage of the gases but at the same time stops the solution.

The plastic and ceramic components are assembled together using a heat sealing process in which the ceramic filter is heated (170°-190° C) followed by pressing of the filter on the plastic base which melts locally, thus forming the join between the parts of the cap.

In the prior art the caps for batteries are assembled manually by a line operator. Said operating mode involves many disadvantages including the poor repeatability of the heat sealing process and therefore low standardisation of the connection between plastic base and the ceramic filter. In fact, in the prior art process, the operator positions the (heated) filters in the heat sealing press using grippers or similar tools (given the high temperature of the filter) which reduce the control over and precision of the operation.

Moreover, disadvantageously the prior art process involves low productivity considering the manual action by the operator and considering that, in general, he can only move one filter at a time. Moreover, after the assembly process, there is usually a sample testing device for the heat sealed caps, which is also controlled by the operator.

On the whole, the entire assembly process (and testing) requires the operator to perform a large number of operations in quick succession which further penalise productivity and may sometimes invalidate the accuracy of the result.

From patent document US2009/118858 it is known a method and apparatus for assembling a complex product.

### Disclosure of the Invention

The technical purpose which forms the basis of this invention is to propose a method and an apparatus for assembling caps which overcome the above mentioned drawbacks of the prior art.

In particular the aim of this invention is to propose a method and an apparatus for assembling caps that are very precise and with a high level of repeatability of the end product.

This invention also aims to provide an apparatus for assembling caps which allows a higher standard of safety for the operator.

Another aim of this invention is to propose a method and an apparatus for assembling caps that allows a high level of productivity and, in particular, which at the same time allows non-destructive testing of all of the units produced.

The technical purpose indicated and the aim specified are substantially achieved by an apparatus and a method for assembling caps with the technical features described in one or more of the appended claims.

In particular, the apparatus according to the invention comprises a base, a feeding station for a succession of supporting bodies, which is connected to the base, a feeding station for a succession of filter elements, which is connected to the base and equipped with heating means configured to raise the temperature of each filter element at least at a coupling portion of the filter element (preferably an end portion), the filter element being connected to a respective supporting body by said coupling portion.

The apparatus also comprises a pressing station connected to the base, set up to receive a heated filter element and at least one corresponding supporting body and configured to couple them to each other by heat sealing (at the coupling portion) to form a cap, and a cooling station connected to the base and designed to receive the cap formed in the pressing station for a predetermined interval of time in order to let it cool.

According to the invention, the apparatus also comprises a testing station connected to the base and designed to receive the at least one cap from the cooling station and configured to measure values of at least one parameter representing a correct operation of the cap, as well as robotized handling means connected to the base and configured to operate on the supporting bodies, the filter elements and the caps in such a way as to pick them up and transport them automatically between the stations.

In particular, the feeding stations are configured to automatically transport the supporting bodies and the filter elements from a supply zone, which is suppliable by an operator, to a pick-up zone and the robotized handling means are configured to pick up the supporting bodies and the filter elements from the pick-up zones and move them to the pressing station.

It should be noticed that the feeding stations, the pressing station, the cooling station and the testing station are angularly distributed around the robotized handling means (that is to say, around the anthropomorphic arm).

In particular, the anthropomorphic robotized arm is pivoted to a central zone of the base and is movable rotatably between the stations.

The feeding station for the filters comprises a heating chamber having at least two partitions made of a heat insulating material which are positioned laterally (on opposite sides of the chamber), extending along a feed direction of the filter elements and slidably inserted in corresponding grooves formed in the base.

The testing station comprises a first substation configured to measure a first parameter (preferably for performing a structural check of each cap), a second substation configured to measure a second parameter (preferably for performing a functional test of each filter element) and a movement carriage for independently transporting each cap from the first substation to the second substation.

### Brief Description of the Drawings

Further features and advantages of the invention are more apparent in the non-limiting description which follows of a preferred non-limiting embodiment of an apparatus and a method for assembling caps illustrated in the accompanying drawings, in which:
Figure 1 is a perspective view of the apparatus in accordance with this invention;

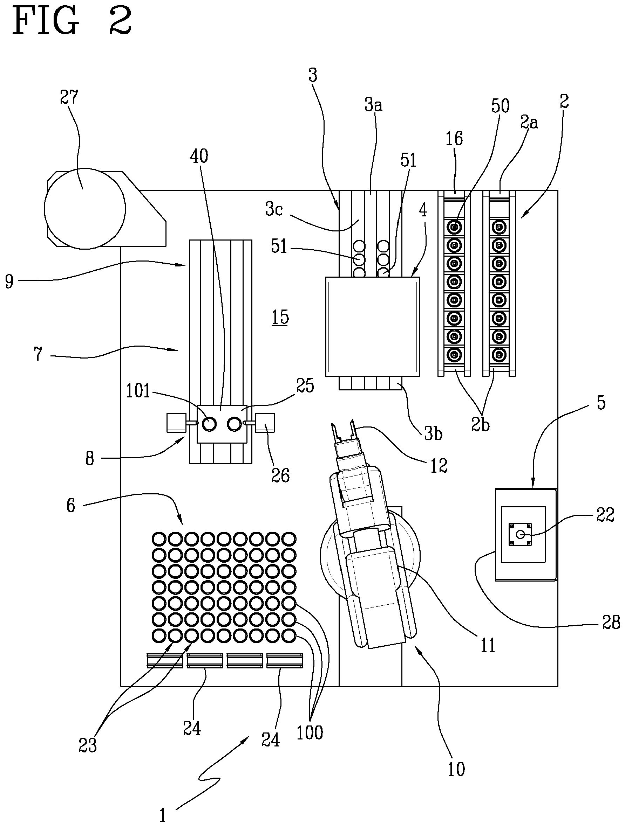

Figure 2 is a top view of the apparatus of Figure 1;

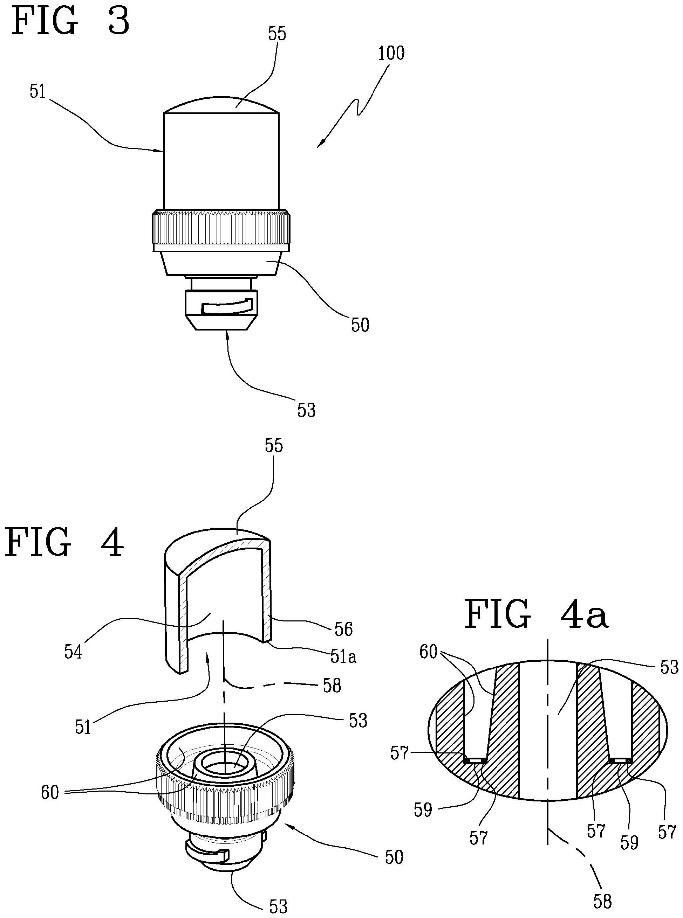

Figure 3 is a side view of a cap produced using the method and the apparatus in accordance with the invention;
Figure 4 is an exploded view of the cap of Figure 3;
Figure 4b is a cross-section of a detail of the cap of Figure 3;

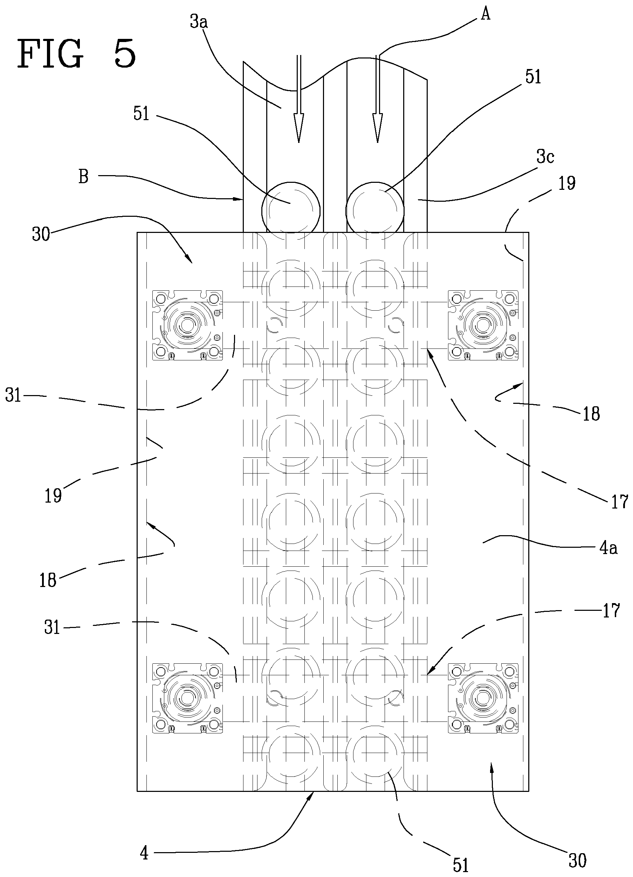

Figure 5 is a view of a station of the apparatus of Figure 1 in accordance
with this invention.

### Detailed Description of the Preferred Embodiments of the Invention

With reference to the accompanying drawings, the numeral 1 denotes an apparatus for assembling caps in accordance with this invention.

The apparatus according to this invention comprises a base 15 on which there are mounted various stations for working the individual components which constitute the end product, that is to say, the cap 100 for batteries. In particular, the caps 100 produced using the assembly apparatus 1 are of the type comprising a supporting body 50, preferably made of plastic material, and a filter element 51.

This latter filter element 51 is preferably made of ceramic material, which has a porosity such that it allows out the gases from the battery and at the same time prevents the liquids from coming out.

In particular, the filter element 51 has a substantially hollow cylindrical shape, in other words tubular, with an upper closing dome 55 preferably made in one piece with the basic body 56.

In an alternative embodiment, the filter elements 51 may have only the cylindrical basic body 56 and the closing function of the dome 55 is performed by a lid made of plastic material (not illustrated) which is also heat sealed to the upper end of the cylindrical basic body 56.

As indicated, the apparatus 1 for assembling caps 100 of the type specified comprises a base on which the various stations are connected.

The term base 15 refers to a reference body to which the stations are fixed.

Said base 15 may therefore be a mobile frame (such as a "table" or platform) or may directly be the ground or a masonry structure.

The apparatus 1 comprises a (first) feeding station 2 for the supporting bodies 50 which is suppliable by an operator. Said first feeding station 2 is configured in such a way that it has a first loading side (or suppliable zone 2a) on which the operator or an automatic feeder acts, and a second side (or pick-up zone 2b), opposite to the first side, which supplies a sequence of supporting bodies 50 for the subsequent processing operations. According to the invention, the two sides are connected by a belt conveyor 16 (or conveyor belt).

Preferably, the conveyor belt 16 can move with intermittent motion to automatically convey the supporting bodies from the zone 2a suppliable by the operator to the pick-up zone 2b.

The apparatus 1 comprises a (second) feeding station 3 for the above-mentioned filter elements 51, which is also suppliable by an operator.

Similarly to the first feeding station 2, the second feeding station 3 comprises a first loading side (or loadable zone 3a) on which the operator or an automatic feeder acts, and a second side (or pick-up zone 3b), opposite to the first side, which supplies a sequence of filter elements 51 for the subsequent processing operations.

At the second feeding station 3, the apparatus 1 comprises heating means 4 (or a heating station) for the filter elements 51.

More particularly, the second feeding station 3 comprises a guide element 3c (advancing member) for moving each filter element 51 between the suppliable zone 3a and the pick-up zone 3b. The guide element 3c defines a movement plane "B" for the filter elements 51 and a feed direction "A" for the filter elements.

It should be noticed that the heating means 4 are configured to raise the temperature of the filter elements 51 at least at a coupling portion 51 a of filter element 51, the filter element 51 being connected to a respective supporting body 50 by said coupling portion 51a.

Depending on the embodiment of the cap, said coupling portion is single or double, usually located at one or both ends of the filter element 51.

With regard to that, the heating station comprises a tunnel (or heating chamber) equipped with heating elements 17 positioned above and below the movement plane "B" for heating the filter elements 51 (preferably by conduction, but special types of heating may also be used, such as laser heating). The tunnel 30 comprises a movable "ceiling" 31 which can be raised and lowered to allow the sequential feeding of the filter elements 51. In particular, when the "ceiling" 31 is lowered it heats, and when the ceiling is raised it allows filter element feeding. The heating station 4 comprises partitions 19 made of insulating material, located laterally, which can be slidably inserted in special grooves 18 formed in the base. In other words, the tunnel comprises at least two partitions 19 made of a heat insulating material, which are located along a feed direction "A" of the filter elements 51 and slidably inserted in corresponding grooves 18 formed in the base 15.

Alternatively, the grooves could be formed in a lower wall of the heating chamber which forms a support for the filter elements 51.

Consequently, a wall parallel with the movement plane.

Advantageously, sliding insertion avoids screw couplings or the like which could deteriorate with the heat and make maintenance difficult.

The apparatus 1 also comprises a pressing station 5 set up to receive at least one supporting body 50 and at least one heated filter element 51. The pressing station 5 is also set up to heat seal to each other the supporting body 50 and the filter element 51 to form a cap 100.

The pressing station 5 comprises at least one sealing cavity 29 in which the supporting body 50 and the heated filter element 51 are positioned, the latter resting on top of the supporting body 50. A contact body 21, preferably driven by a hydraulic piston 22, presses the filter element 51 against the supporting body 50 below. The filter element 51, being at a high temperature (170°-190°), locally melts the plastic of the supporting body 50, thus heat sealing together the two components.

Preferably, the apparatus comprises a station for preparing the supporting bodies 50 (not illustrated in the accompanying drawings).

It should be noticed that the supporting body 50 forms an annular recess, that is to say, an annular chamber designed to receive the filter element 51.

Said annular chamber is delimitated by a bottom wall 59 and by two lateral walls 60. The bottom wall 59 is ring-shaped and the lateral walls 60 are substantially cylindrical (or slightly conical). Preferably, the lateral walls are coaxial with a longitudinal axis 58 around which the supporting body 50 extends (the body preferably having a cylindrical geometry). Therefore, of the lateral walls 60 of the annular chamber of the supporting body 50, one is external and the other internal, relative to said axis of the supporting body 50.

In particular, the bottom wall of the annular chamber of the supporting body 50 is designed to receive a coupling portion 51a of a corresponding filter element 51 (said coupling portion 51 a e is in turn annular and is pressed against the bottom wall 59 of the supporting body 50).

Said station for preparing the supporting bodies 50 comprises injector means configured to distributed a line 57 of liquid plastic material on the bottom wall of the annular chamber of the supporting body, at the intersection between said bottom wall 59 and at least one of the lateral walls 60 delimiting said annular chamber.

Preferably, the injector means are configured to distribute the line 57 of liquid plastic material on the bottom wall 59 at the intersection with the external lateral wall 60 delimiting the annular chamber.

Preferably, the injector means are configured to distribute a first and a second line 57 of liquid plastic material on the bottom wall 59 at the intersection with the external lateral wall 60 and the internal lateral wall which respectively delimit the annular chamber.

Preferably, the plastic material of the line is the same material used to make the supporting body 50 (for example PP or ABS), for example with a (non-toxic) solvent additive to make it liquid.

Preferably, the injector means are connected to a tank of said liquid plastic material.

The liquid plastic material of the line 57 is designed in such a way that it solidifies after a predetermined time (for example due to evaporation of the solvent), after the supporting body 50 has been coupled to the filter element 51.

Therefore, said at least one solidified line 57 forms a seal around the filter, which protects against penetration inside the battery by a flame which could develop outside the filter. That is particularly important in cases in which the pressure seal between the ceramic filter and plastic supporting body is faulty.

The apparatus 1 also comprises a cooling station 6 for at least one cap 100 formed in the pressing station 5. The cap 100 formed in the pressing station 5 is extracted while it is still hot and is positioned in the cooling station 6. Given the thermal inertia of the ceramic material used to make the filter elements 51, the cap 100 placed in the cooling station 6 takes a predetermined amount of time to return to ambient temperature (around 20 minutes). In other words, the cooling station 6 is a buffer comprising a plurality of slots 23 in which to rest the caps 100 formed in the pressing station 5 so that they can be left to cool. In that way, at any given moment there are caps 100 in the buffer which have reached different degrees of cooling.

Preferably, the cooling station 6 comprises at least one fan 24 generating an air flow that strikes the caps 100.

The apparatus 1 also comprises a testing station 7 set up to receive at least one cap 100 from the cooling station 6 thanks to the robotized handling means 10 and to test the cap 100 (that is to say, configured to measure values of at least one parameter representing a correct operation of the cap).

Said testing station 7 can test at least one cap 100 simultaneously with the creation of a cap 100 by the pressing station 5.

The testing station 7 comprises a first substation 8, configured to measure a first parameter (and in particular to perform a structural check of each cap 100 so as to check its mechanical strength) and a second substation 9, configured to measure a second parameter (and in particular to perform a functional test of the filter element 51 to check its effective capacity of disposing of the gases).

In light of this, the testing station comprises a movement carriage 40 for independently transporting each cap 100 from the first substation 8 to the second substation 9.

More particularly, the testing station 7 comprises a structural test substation 8 (first substation) for checking the mechanical strength of the cap 100 just formed and a functional test substation 9 for checking the filter element 51 effective capacity of disposing of gases.

In a preferred embodiment, the testing station 7 comprises at least one gripping device 25 for at least one cap 100, for locking the selfsame cap 100 during testing operations.

In a preferred embodiment, said gripping device 25 is a clamp which is coupled to a lower portion of the supporting body 50 which is part of the cap 100 to be tested. The clamp 25 has the function of constraining the cap during the testing steps.

The gripping device 25 is operatively connected to the robotized handling means 10 for receiving at least one cap 100 to be tested. In particular, the gripping device 25 can move between the structural test substation 8 and the functional test substation 9.

The structural test substation 8 comprises, in particular, at least one pushing element 26 acting on the cap 100 filter element 51 with an action practically at right angles to the direction of extension of the cap 100 in order to subject the cap 100 to a bending moment.

In a preferred embodiment, the pushing element 26 acts on a lateral surface of the filter element 51, close to an upper end of it, so as to generate a bending moment which tests the strength of the connection between the supporting body 50 and the filter element 51 produced by the heat sealing process.

The functional test substation 9 (second substation) comprises a pressurized gas pumping device 27, the gas being sent into an internal chamber 54 of the filter element 51. In fact, it should be noticed that the supporting body 50 comprises a through hole 53 forming an entrance to the internal chamber 54 and that, in practice, it puts in communication the internal chamber 54 of the filter element 51 and the inside of the battery to which the cap 100 is applied.

The pumping device 27 is connected to the above-mentioned gripping device 25 and, through the latter, is connected to the internal chamber 54 of the filter element 51.

At an operational level, the pumping device 27 injects a predetermined quantity of air, at a pressure greater than atmospheric pressure, into the internal chamber 54.

The functional test substation 9 also comprises at least one pressure sensor 28 designed to measure the pressure in the internal chamber 54 of the filter element 51.

In particular, if the pressure detected by the sensor 28 (stagnation pressure) is consistent with the values set again (or correlated with regulations or with values dictated by experience) then the test is passed. If not, the cap 100 is rejected.

In particular, the testing station 7 also comprises separation of the caps that passed the test and the faulty caps. To perform this operation, the testing station 7 comprises a selection device 30 positioned downstream of the substations 8 and 9 and able to separate the caps 100 which passed the test from the caps 100 which failed the test. In other words, the testing station 7 control logic recognises, by means of sensors not illustrated, whether or not the test was passed and operates the selection device 30 between two configurations which divert the cap 100 tested in one case into a "validated" products tank and in the second case into the rejects. More particularly, the selection device 30 comprises an ejection chute which directs the cap 100 tested towards the "validated" products or the rejects, depending on the test result.

Advantageously, the apparatus 1 also comprises robotized movement (or handling) means 10 operatively associated with the first feeding station 2, the second feeding station 3 (downstream of the heating means 4), the pressing station 5 and the cooling station 6, for picking up, moving and positioning the supporting bodies 50, the filter elements 51 and the caps 100 between the various stations.

In other words, the robotized handling means 10 are connected to the base 15 and act on the supporting bodies 50, the filter elements 51 and the caps 100 in such a way as to pick them up and transport them automatically between the stations 2, 3, 5, 6, 7 (that is to say, from one station to the next).

The robotized handling means 10 are able to pick up a supporting body 50 and a filter element 51 from the respective feeding 2 and heating 4 stations and place them at the pressing station 5. In a subsequent step, the robotized handling means 10 can pick up from the pressing station 5 a cap 100 obtained by heat sealing to each other a supporting body 50 and the respective filter element 51, and finally it can place the cap 100 at the cooling station 6.

Preferably, the robotized handling means 10 comprise a robotized arm 11 which can be switched between a first operating configuration where it is set to pick up a single supporting body 50, and a second operating configuration, where it is set to pick up a pair of supporting bodies 50, depending on a predetermined type of the cap 100 to be assembled.

In other words, depending on the embodiment of the cap 100 (with a single supporting body 50 or two supporting bodies 50), the robotized arm can vary the operating configuration.

Advantageously, that allows the apparatus to manage the format changeover in a simple way.

In particular, the anthropomorphic robotized arm 11 is equipped with at least one grabber 12 located at its free end.

Preferably, in the preferred embodiment, the robotized arm 11 comprises a pair of grabbers 12 side by side. Said grabbers 12 are characterised by the fact that they are suitable for grabbing both the supporting bodies 50 and the filter elements 51.

Advantageously, that allows the assembly of two caps 100 at a time, thus speeding up production.

Preferably, the feeding stations 2, 3, the pressing station 5, the cooling station 6 and the testing station 7 are angularly distributed around the robotized handling means 10.

Consequently, the anthropomorphic robotized arm 11 is pivoted to a central zone of the base 15 and is movable rotatably between the stations 2, 3, 5, 6, 7.

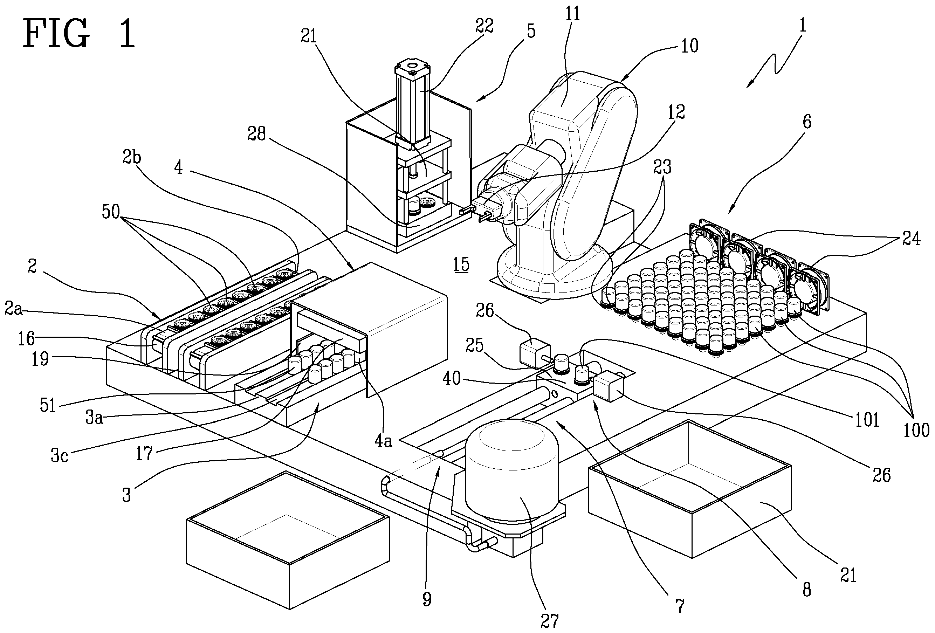

The particular layout of the apparatus 1, visible in Figure 1, shows the feeding stations (both the first 2 and the second 3), the heating station 4, the pressing station 5 and the cooling station 6 angularly distributed around the robotized handling means 10 so as to minimize the distances that the robotized handling means 10 must travel while performing the assembly steps.

The assembly method used by the apparatus 1 will now be described.

The method for assembling caps according to this invention comprises the steps of:
- preparing a supporting body 50 in the first feeding station 2 (this step being performed directly by an operator);
- preparing a filter element 51 in the second feeding station 3 (this step being performed directly by an operator);
- transferring the filter element 51 to the heating station 4 in which the filter element 51 is heated to a predetermined temperature (preferably 175° C);
- picking up, with the robotized handling means 10, the supporting body 50 from the first feeding station 2 and placing it at the pressing station 5;
- picking up, again with the robotized handling means 10, a filter element 51 from the heating station 4 and placing it at the pressing station 5;
- heat sealing to each other the supporting body 50 and the filter element 51 at the pressing station 5, thus obtaining a cap 100;
- picking up from the pressing station 5, with the robotized handling means 10, the cap 100 previously made and placing the cap at the cooling station 6.

Advantageously, in said method, applicable thanks to the configuration of the apparatus 1 described above, the various steps of transporting the supporting bodies 50, the filter elements 51 and the caps 100 are performed (preferably exclusively) by the robotized handling means 10.

Preferably, said method comprises a step of preparing the supporting bodies 50, before placing the supporting bodies in the pressing station 5.

Said step of preparing the supporting bodies 50 comprises (for each supporting body 50) distributing at least one line 57 of liquid plastic material on the bottom wall 59 of the annular chamber formed by the supporting body 50 (the bottom wall 59 being designed to receive a coupling portion 51a of a corresponding filter element 51).

Said line 57 is distributed at the intersection between the bottom wall 59 and at least one of the lateral annular walls 60 delimiting the annular chamber, as described above with reference to the apparatus.

In the preferred embodiment of the apparatus, and consequently of the method, the method also comprises a step of testing the caps 100. Said testing step is preceded by a step of picking up a cap 100 from the cooling station 6 using the robotized handling means 10 and a step of placing the cap 100 in the testing station 7.

More particularly, the step of testing the cap 100 is, at least partly, simultaneous with the step of heat sealing another cap 100.

In other words, at least part of the period of time needed for heat sealing one cap 100 is simultaneous with part of the period of time needed for a testing cycle on another cap 100 (or a pair of caps).

The simultaneous nature of different steps of the method is crucial to increasing productivity and also allows testing to be carried out on all caps made by the apparatus 1.

In fact, in more detail, considering an apparatus operating cycle, the above-mentioned robotized handling means 10 initially perform the steps of picking up the supporting body 50 and the filter element 51 and place the supporting body 50 and the filter element 51 in the pressing station 5. Then the robotized handling means 10 pick up a cap 100 (made in a previous operating cycle) from the cooling station 6 and release the cap 100 to the testing station 7. Then the robotized handling means 10 pick up the cap 100 currently being processed from the pressing station 5 and release it into the cooling station 6. Therefore, the latter step is performed by the robotized handling means 10 while the testing station 7 is already carrying out the tests on the cap 100 previously positioned by the same robotized handling means 10.

In accordance with the above, the testing step comprises a structural test step performed using a pushing element 26 acting on the filter element 51 and a functional test step performed by means of the gas pumping device 27, preferably for pumping air, in which the pumping device 27 is in fluid communication with the filter element 51.

The functional test step is also carried out by means of the pressure sensor 28 which, as indicated, can measure the pressure inside the filter element 51.

Therefore, from the description of the method implemented by the apparatus 1 it may be inferred that all of the transfer steps are performed by the above-mentioned robotized handling means 10 and are timed relative to each other so as to optimize apparatus 1 productivity.

The invention described achieves the preset aim and has the above-mentioned important advantages.

In fact, this invention allows a cap assembly process able to guarantee a high level of precision and end product repeatability thanks to the presence of robotized handling means which allow precise and accurate pick up and positioning of the supporting body and the filter element used to make the cap. Moreover, the presence of the robotized handling means allows an increase in safety standards, since the heated filter elements are moved by machines rather than operators. In fact the operator is only needed (if at all) for feeding the supporting bodies and filter elements. Furthermore, the presence of a fully automated testing station served by the robotized handling means allows the apparatus to check the quality of the process performed for all items produced, with consequent big advantages in terms of inexpensiveness and production output.

## Claims

1. An apparatus for assembling caps having at least a supporting body (50) of plastic material and a filter element (51) of ceramic material, **characterized in that** it comprises, in combination:
- a base (15);
- a feeding station (2) for a succession of supporting bodies (50), which is connected to the base (15);
- a feeding station (3) for a succession of filter elements (51), which is connected to the base (15) and equipped with heating means (4) configured to raise the temperature of each filter element (51) at least at a coupling portion (51a) of filter element (51), the filter element (51) being designed to be connected to a respective supporting body (50) by said coupling portion (51a);
- a pressing station (5) connected to the base (15), set up to receive a heated filter element (51) and at least one corresponding supporting body (50) and configured to couple them to each other by heat sealing to form a cap (100);
- a cooling station (6) connected to the base (15) and designed to receive the cap (100) formed in the pressing station (5) for a predetermined interval of time in order to let it cool;
- a testing station (7) connected to the base (15), designed to receive the at least one cap (100) from the cooling station (6) and configured to measure values of at least one parameter representing a correct operation of the cap;
- robotized handling means (10) connected to the base (15) and configured to operate on the supporting bodies (50), the filter elements (51) and the caps (100) in such a way as to pick them up and transport them automatically between the stations (2, 3, 5, 6, 7);
- a station for preparing the supporting bodies (50), comprising injector means configured to distribute a line (57) of liquid plastic material on a bottom wall of an annular chamber formed by the supporting body (50) and intended to receive a coupling portion (51a) of a corresponding filter element (51), at the intersection between said bottom wall and at least one of the lateral annular walls delimiting said annular chamber.

2. The apparatus according to claim 1, wherein the feeding stations (2, 3) are configured to automatically transport the supporting bodies (50) and the filter elements (51) from a supply zone (2a, 3a), which is suppliable by an operator, to a pick-up zone (2b, 3b); the robotized handling means (10) being configured to pick up the supporting bodies (50) and the filter elements (51) from the pick-up zones (2b, 3b) and move them to the pressing station (5).

3. The apparatus according to claim 1 or 2, wherein the robotized handling means (10) comprise a robotized arm (11) which can be switched between a first operating configuration where it is set to pick up a single supporting body, and a second operating configuration, where it is set to pick up a pair of supporting bodies (50), depending on a predetermined type of the cap (100) to be assembled.

4. The apparatus according to any of the preceding claims, wherein the feeding stations (2, 3), the pressing station (5), the cooling station (6) and the testing station (7) are angularly distributed around the robotized handling means (10).

5. The apparatus according to claim 3 or 4, wherein the robotized arm (11) is pivoted to a central zone of the base (15) and is movable rotatably between the stations (2, 3, 5, 6, 7).

6. The apparatus according to any of the preceding claims, wherein the feeding station (3) for the filter elements (51) comprises an advancing member (3c) movable through a heating chamber (4a); the heating chamber (4a) having at least two partitions (19) made of a heat insulating material, located along a feed direction (A) of the filter elements (51) and slidably inserted in corresponding grooves (18) formed in the base (15).

7. The apparatus according to any of the preceding claims, wherein the testing station (7) comprises
- a first substation (8) configured to measure a first parameter representing a correct operation of the cap (100),
- a second substation (9) configured to measure a second parameter representing a correct operation of the cap (100),
- a movement carriage for independently transporting each cap (100) from the first substation (8) to the second (9).

8. The apparatus according to claim 7, wherein the testing station (7) comprises a reject conduit leading out of and away from each substation (8, 9) in order to discharge defective caps into a container (21) adapted to receive said defective caps.

9. The apparatus according to any of the preceding claims, wherein the testing station (7) comprises a structural checking substation (8) having at least one gripping device (25) for at least one cap (100), for locking the selfsame cap (100) and a pushing element (26) operating on the filter element (51) of the cap (100) at right angles to a direction of extension of the cap (100) in order to subject it to a bending moment.

10. The apparatus according to any of the preceding claims, wherein the testing station (7) comprises a functional checking substation (9) having a pressurized gas pumping device (27) configured to pump the gas into an internal chamber (54) of the filter element (51), and at least one pressure sensor (28) configured to measure the pressure inside the internal chamber (54) of the selfsame filter element (51).

11. A method for automatically assembling caps having at least a supporting body (50) of plastic material and a filter element (51) of porous ceramic material, **characterized in that** it comprises the steps of:
- preparing in sequence a plurality of supporting bodies (50) or pairs of supporting bodies and a corresponding sequence of the filter elements (51) in corresponding feeding stations (2, 3);
- transferring each supporting body (50) or pair of supporting bodies to a pick-up zone (2b) of the respective feeding station (2), using a conveyor belt (3c);
- transferring each filter element (51) to a pick-up zone (3b) of the respective feeding station (3) and concurrently heating at least one coupling portion (51a) of the at least one filter element (51) to a predetermined temperature;
- picking up with the robotized handling means (10) the at least one supporting body (50) from the feeding station (2) and placing the supporting body (50) at a pressing station (5);
- picking up the at least one filter element (51) from the heating station (4) and placing the filter element (51) at the pressing station (5), using the robotized handling means (10);
- making, in the pressing station (5), a heat seal between the supporting body (50) and the filter element (51) at the coupling portion (51a) of the filter element (51) in order to obtain a cap (100);
- picking up the cap (100) from the pressing station (5) using the robotized handling means (10) and placing the cap (100) at a cooling station (6);
- picking up the cooled cap (100) from the cooling station (6) using the robotized handling means (10) and placing the cap (100) at a testing station (7);
- testing the cap (100) by measuring values of at least one parameter representing a correct operation of the selfsame cap (100),
wherein, before placing the supporting body (50) in the pressing station (5), for each supporting body (50) a line (57) of liquid plastic material is distributed on a bottom wall of an annular chamber formed by the supporting body (50) and designed to receive a coupling portion (51a) of a corresponding filter element (51), at the intersection between said bottom wall and at least one of the lateral annular walls delimiting said annular chamber.

12. The method according to claim 11, wherein the step of testing the cap (100) is divided into a first sub-step of checking the mechanical strength of the cap (100) by applying a bending moment, and a second sub-step of checking the effective capacity of disposing of the gases in the cap by pumping a gas into an internal chamber (54) in the cap (100).

13. The method according to claim 11 or 12, wherein the first and second checking sub-steps are performed in respective substations; the method further comprising a step of automatically transporting each cap between the substations using an automatic carriage (40).

14. The method according to any of the claims from 11 to 13, wherein between the step of picking up the supporting body (50), the filter element (51) or the cap (100) from one station and the step of placing the supporting body (50), the filter element (51) or the cap (100) at the next station there is a step of rotatably transporting the supporting body (50), the filter element (51) or the cap (100) using the robotized handling means (10).

## Patentansprüche

1. Vorrichtung zur Montage von Kappen, die mindestens einen Stützkörper (50) aus Kunststoff und ein Filterelement (51) aus keramischem Material aufweisen, **dadurch gekennzeichnet, dass** sie in Kombination umfasst:
- eine Basis (15);
- eine Zuführstation (2) für eine Reihe von Stützkörpern (50), die mit der Basis (15) verbunden ist;
- eine Zuführstation (3) für eine Reihe von Filterelementen (51), die mit der Basis (15) verbunden ist und ausgestattet mit Heizmitteln (4), konfiguriert, um die Temperatur jedes Filterelements (51) mindestens bei einem Kupplungsteil (51a) des Filterelements (51) zu erhöhen, wobei das Filterelement (51) ausgelegt ist, um mit einem jeweiligen Stützkörper (50) des Kupplungsteils (51a) verbunden zu werden;
- eine Pressstation (5), mit der Basis (15) verbunden, eingerichtet, um ein beheiztes Filterelement (51) und mindestens einen entsprechenden Stützkörper (50) zu empfangen und konfiguriert, um sie miteinander durch Heißsiegeln zu koppeln, um eine Kappe (100) zu bilden;
- eine Kühlstation (6), mit der Basis (15) verbunden und ausgelegt, um die in der Pressstation (5) geformte Kappe (100) für eine vorgegebene Zeitspanne zu empfangen, um sie abkühlen zu lassen;
- eine Prüfstation (7), mit der Basis (15) verbunden, ausgelegt, um die mindestens eine Kappe (100) von der Kühlstation (6) zu empfangen und konfiguriert, um die Werte von mindestens einem Parameter zu messen, der eine korrekten Arbeitsweise der Kappe darstellt;
- robotisierte Handhabungsmittel (10), mit der Basis (15) verbunden und konfiguriert, um auf die Stützkörper (50), die Filterelemente (51) und die Kappen (100) zu arbeiten, sodass sie diese abholen und zwischen den Stationen (2, 3, 5, 6, 7) automatisch transportieren;
- eine Station zum Vorbereiten der Stützkörper (50), umfassend Einspritzmittel, konfiguriert, um eine Linie (57) aus flüssigem Kunststoff an einer Bodenwand einer ringförmigen Kammer, die durch den Stützkörper (50) gebildet wird, zu verteilen und bestimmt, den Kupplungsteil (51a) eines entsprechenden Filterelements (51) an der Kreuzung zwischen der Bodenwand und mindestens einer der ringförmigen Seitenwände zu empfangen, die die ringförmige Kammer abgrenzen.

2. Vorrichtung nach Anspruch 1, wobei die Zuführstationen (2, 3) konfiguriert sind, um die Stützkörper (50) und die Filterelemente (51) von einem Versorgungsbereich (2a, 3a), der von einem Bediener versorgt werden kann, zu einem Abholbereich (2b, 3b) automatisch zu transportieren, wobei die robotisierten Handhabungsmittel (10) konfiguriert sind, um die Stützkörper (50) und die Filterelemente (51) aus den Abholbereichen (2b, 3b) abzuholen und sie in die Pressstation (5) zu verschieben.

3. Vorrichtung nach Anspruch 1 oder 2, wobei die robotisierten Handhabungsmittel (10) einen robotisierten Arm (11) umfassen, der zwischen einer ersten Betriebskonfiguration, in der er eingestellt ist, um einen einzigen Stützkörper abzuholen, und einer zweiten Betriebskonfiguration umschaltbar ist, in der er eingestellt ist, um ein Paar Stützkörper (50) abhängig von einer vorgegebenen Art der zu montierenden Kappe (100) abzuholen.

4. Vorrichtung nach einem der vorhergehenden Ansprüche, wobei die Zuführstationen (2, 3), die Pressstation (5), die Kühlstation (6) und die Prüfstation (7) winklig um die robotisierten Handhabungsmittel (10) verteilt sind.

5. Vorrichtung nach Anspruch 3 oder 4, wobei der robotisierte Arm (11) um einen zentralen Bereich der Basis (15) verschwenkt und zwischen den Stationen (2, 3, 5, 6, 7) drehbar beweglich ist.

6. Vorrichtung nach einem der vorhergehenden Ansprüche, wobei die Zuführstation (3) für die Filterelemente (51) ein Vorschubglied (3c) umfasst, das durch eine Heizkammer (4a) bewegbar ist, wobei die Heizkammer (4a) mindestens zwei Trennwände (19) aus einem wärmedämmenden Material aufweist, die entlang einer Zuführrichtung (A) der Filterelemente (51) angeordnet und in entsprechenden in der Basis (15) gebildeten Nuten (18) verschiebbar eingelegt sind.

7. Vorrichtung nach einem der vorhergehenden Ansprüche, wobei die Prüfstation (7) umfasst
- eine erste Unterstation (8), konfiguriert, um einen ersten Parameter zu messen, der eine korrekte Arbeitsweise der Kappe (100) darstellt,
- eine zweite Unterstation (9), konfiguriert, um einen zweiten Parameter zu messen, der eine korrekte Arbeitsweise der Kappe (100) darstellt,
- einen Bewegungswagen für den unabhängigen Transport jeder Kappe (100) aus der ersten Unterstation (8) zu der zweiten (9).

8. Vorrichtung nach Anspruch 7, wobei die Prüfstation (7) eine Ausschussleitung umfasst, die aus und weg von jeder Unterstation (8, 9) führt, um defekte Kappen in einen Behälter (21) zu entladen, angepasst, um defekte Kappen zu empfangen.

9. Vorrichtung nach einem der vorhergehenden Ansprüche, wobei die Prüfstation (7) eine strukturelle Kontrollunterstation (8) umfasst, die mindestens eine Greifeinrichtung (25) für mindestens eine Kappe (100) für die Verriegelung der selbigen Kappe (100) und ein Schubelement (26) aufweist, das auf das Filterelement (51) der Kappe (100) in rechten Winkeln zu einer Ausdehnungsrichtung der Kappe (100) arbeitet, damit sie einem Biegemoment unterworfen wird.

10. Vorrichtung nach einem der vorhergehenden Ansprüche, wobei die Prüfstation (7) eine funktionelle Kontrollunterstation (9) umfasst, die eine Pumpeneinrichtung für druckbeaufschlagtes Gas (27) aufweist, konfiguriert, um das Gas in eine innere Kammer (54) des Filterelements (51) zu pumpen, und mindestens einen Drucksensor (28), konfiguriert, um den Druck innerhalb der inneren Kammer (54) des selbigen Filterelements (51) zu messen.

11. Verfahren zur Montage von Kappen, die mindestens einen Stützkörper (50) aus Kunststoff und ein Filterelement (51) aus porösem keramischem Material aufweisen, **dadurch gekennzeichnet, dass** es folgende Schritte umfasst:
- Vorbereiten in einer Reihenfolge einer Vielzahl von Stützkörpern (50) oder Paaren von Stützkörpern und einer entsprechenden Reihe von Filterelementen (51) in entsprechenden Zuführstationen (2, 3);
- Übertragen jedes Stützkörpers (50) oder Paares von Stützkörpern zu einem Abholbereich (2b) der jeweiligen Zuführstation (2), mit einem Förderband (3c);
- Übertragen jedes Filterelements (51) zu einem Abholbereich (3b) der jeweiligen Zuführstation (3) und gleichzeitiges Heizen mindestens eines Kupplungsteils (51a) des mindestens einen Filterelements (51) auf eine vorgegebene Temperatur;
- Abholen mit den robotisierten Handhabungsmitteln (10) des mindestens einen Stützkörpers (50) aus der Zuführstation (2) und Platzieren des Stützkörpers (50) an eine Pressstation (5);
- Abholen des mindestens einen Filterelements (51) aus der Heizstation (4) und Platzieren des Filterelements (51) an die Pressstation (5), mit den robotisierten Handhabungsmitteln (10);
- Ausführen, in der Pressstation (5), eines Heißsiegels zwischen dem Stützkörper (50) und dem Filterelement (51) am Kupplungsteil (51a) des Filterelements (51), um eine Kappe (100) zu erhalten;
- Abholen der Kappe (100) von der Pressstation (5) mit den robotisierten Handhabungsmitteln (10) und Platzieren der Kappe (100) an eine Kühlstation (6);
- Abholen der gekühlten Kappe (100) von der Kühlstation (6) mit den robotisierten Handhabungsmitteln (10) und Platzieren der Kappe (100) an eine Prüfstation (7);
- Prüfen der Kappe (100) durch die Messung der Werte von mindestens einem Parameter, der die korrekte Arbeitsweise der selbigen Kappe (100) darstellt,
wobei vor der Platzierung des Stützkörpers (50) in die Pressstation (5), für jeden Stützkörper (50) eine Linie (57) aus flüssigem Kunststoff an einer Bodenwand einer ringförmigen Kammer verteilt wird, die durch den Stützkörper (50) gebildet wird und ausgelegt ist, um einen Kupplungsteil (51a) eines entsprechenden Filterelements (51) an der Kreuzung zwischen der Bodenwand und mindestens einer der ringförmigen Seitenwände zu empfangen, die die ringförmige Kammer abgrenzen.

12. Verfahren nach Anspruch 11, wobei der Schritt zum Testen der Kappe (100) sich in einen ersten Teilschritt zur Überprüfung der mechanischen Festigkeit der Kappe (100) durch die Anwendung eines Biegemoments und einen zweiten Teilschritt zur Überprüfung der effektiven Kapazität für den Abtransport der Gase in der Kappe durch Pumpen eines Gases in eine innere Kammer (54) in der Kappe (100) gliedert.

13. Verfahren nach Anspruch 11 oder 12, wobei der erste und zweite Überprüfungsteilschritt in den jeweiligen Unterstationen durchgeführt werden, wobei das Verfahren ferner einen Schritt zum automatischen Transport jeder Kappe zwischen den Unterstationen mit einem automatischen Wagen (40) umfasst.

14. Verfahren nach einem der Ansprüche 11 bis 13, wobei es zwischen dem Schritt zum Abholen des Stützkörpers (50), des Filterelements (51) oder der Kappe (100) von einer Station und dem Schritt zum Platzieren des Stützkörpers (50), des Filterelements (51) oder der Kappe (100) bei der nächsten Station einen Schritt zum drehbaren Transport des Stützkörpers (50), des Filterelements (51) oder der Kappe (100) mit den robotisierten Handhabungsmitteln (10) gibt.

## Revendications

1. Appareil pour assembler des bouchons qui ont au moins un corps de support (50) en matière plastique et un élément filtrant (51) en matériau céramique, **caractérisé en ce qu'**il comprend, en combinaison :
- une base (15) ;
- un poste d'alimentation (2), pour une succession de corps de support (50), étant relié à la base (15) ;
- un poste d'alimentation (3), pour une succession d'éléments filtrants (51), étant relié à la base (15) et équipé de moyens de chauffage (4) configurés pour augmenter la température de chaque élément filtrant (51) au moins en correspondance d'une partie d'accouplement (51a) de l'élément filtrant (51), l'élément filtrant (51) étant conçu pour être relié à un corps de support (50) respectif par ladite partie d'accouplement (51a) ;
- un poste de pressage (5) relié à la base (15), réglé pour recevoir un élément filtrant chauffé (51) et au moins un corps de support (50) correspondant et configuré pour les accoupler réciproquement par thermosoudage pour former un bouchon (100) ;
- un poste de refroidissement (6) relié à la base (15) et conçu pour recevoir le bouchon (100) formé dans le poste de pressage (5) pendant un intervalle de temps prédéfini afin de lui permettre de refroidir ;
- un poste d'essai (7), relié à la base (15), conçu pour recevoir l'au moins un bouchon (100) du poste de refroidissement (6) et configuré pour mesurer des valeurs d'au moins un paramètre représentant un fonctionnement correct du bouchon ;
- des moyens de manipulation robotisés (10) reliés à la base (15) et configurés pour agir sur les corps de support (50), les éléments filtrants (51) et les bouchons (100) de manière à les saisir et à les transporter automatiquement entre les postes (2, 3, 5, 6, 7) ;
- un poste, servant à préparer les corps de support (50), comprenant des moyens d'injection configurés pour distribuer une ligne (57) de matière plastique liquide sur une paroi de fond d'une chambre annulaire formée par le corps de support (50) et prévue pour recevoir une partie d'accouplement (51a) d'un élément filtrant (51) correspondant à l'intersection entre ladite paroi de fond et au moins une des parois annulaires latérales délimitant ladite chambre annulaire.

2. Appareil selon la revendication 1, dans lequel les postes d'alimentation (2, 3) sont configurés pour transporter automatiquement les corps de support (50) et les éléments filtrants (51) d'une zone d'approvisionnement (2a, 3a), étant approvisionnable par un opérateur, à une zone de préhension (2b, 3b) ; les moyens de manipulation robotisés (10) étant configurés pour saisir les corps de support (50) et les éléments filtrants (51) à partir des zones de préhension (2b, 3b) et les déplacer vers le poste de pressage (5).

3. Appareil selon la revendication 1 ou 2, dans lequel les moyens de manipulation robotisés (10) comprennent un bras robotisé (11) pouvant commuter entre une première configuration de fonctionnement, où il est réglé pour saisir un seul corps de support, et une seconde configuration de fonctionnement, où il est réglé pour saisir une paire de corps de support (50), selon un type prédéterminé de bouchon (100) à assembler.

4. Appareil selon l'une quelconque des revendications précédentes, dans lequel les postes d'alimentation (2, 3), le poste de pressage (5), le poste de refroidissement (6) et le poste d'essai (7) sont angulairement répartis autour des moyens de manipulation robotisés (10).

5. Appareil selon la revendication 3 ou 4, dans lequel le bras robotisé (11) est monté de façon pivotante à une zone centrale de la base (15) et est mobile en rotation entre les postes (2, 3, 5, 6, 7).

6. Appareil selon l'une quelconque des revendications précédentes, dans lequel le poste d'alimentation (3) pour les éléments filtrants (51) comprend un organe de progression (3c) mobile à travers une chambre de chauffage (4a) ; la chambre de chauffage (4a) comportant au moins deux séparations (19), composées d'un matériau calorifuge, situées le long d'une direction d'alimentation (A) des éléments filtrants (51) et insérées de façon coulissante dans des rainures (18) correspondantes formées dans la base (15).

7. Appareil selon l'une quelconque des revendications précédentes, dans lequel le poste d'essai (7) comprend
- un premier sous-poste (8) configuré pour mesurer un premier paramètre représentant un fonctionnement correct du bouchon (100),
- un second sous-poste (9) configuré pour mesurer un second paramètre représentant un fonctionnement correct du bouchon (100),
- un chariot de déplacement pour transporter de façon indépendante chaque bouchon (100) du premier sous-poste (8) au second (9).

8. Appareil selon la revendication 7, dans lequel le poste d'essai (7) comprend un conduit de rejet menant à l'extérieur de et s'éloignant de chaque sous-poste (8, 9) afin de décharger les bouchons défectueux dans un récipient (21) adapté à recevoir lesdits bouchons défectueux.

9. Appareil selon l'une quelconque des revendications précédentes, dans lequel le poste d'essai (7) comprend un sous-poste de vérification structurelle (8), comportant au moins un dispositif de prise (25) pour au moins un bouchon (100) pour verrouiller le même bouchon (100) et un élément de poussée (26) agissant sur l'élément filtrant (51) du bouchon (100) orthogonalement à une direction d'extension du bouchon (100) afin de le soumettre à un moment de flexion.

10. Appareil selon l'une quelconque des revendications précédentes, dans lequel le poste d'essai (7) comprend un sous-poste de vérification fonctionnelle (9) comportant un dispositif de pompage de gaz sous pression (27), configuré pour pomper le gaz dans une chambre interne (54) de l'élément filtrant (51), et au moins un capteur de pression (28), configuré pour mesurer la pression à l'intérieur de la chambre interne (54) du même élément filtrant (51).

11. Procédé pour assembler automatiquement des bouchons qui ont au moins un corps de support (50) en matière plastique et un élément filtrant (51) en matériau céramique poreux, **caractérisé en ce qu'**il comprend les étapes de :
- préparer en séquence une pluralité de corps de support (50) ou des paires de corps de support et une séquence correspondante d'éléments filtrants (51) dans des postes d'alimentation (2, 3) correspondants ;
- transférer chaque corps de support (50) ou paires de corps de support vers une zone de préhension (2b) du poste d'alimentation (2) respectif, en utilisant une bande transporteuse (3c) ;
- transférer chaque élément filtrant (51) vers une zone de préhension (3b) du poste d'alimentation (3) respectif et chauffer simultanément au moins une partie d'accouplement (51a) de l'au moins un élément filtrant (51) à une température prédéfinie ;
- saisir avec les moyens de manipulation robotisés (10) l'au moins un corps de support (50) à partir du poste d'alimentation (2) et placer le corps de support (50) en correspondance d'un poste de pressage (5) ;
- saisir l'au moins un élément filtrant (51) à partir du poste de chauffage (4) et placer l'élément filtrant (51) en correspondance du poste de pressage (5), en utilisant les moyens de manipulation robotisés (10) ;
- réaliser, dans le poste de pressage (5), une thermosoudure entre le corps de support (50) et l'élément filtrant (51) en correspondance de la partie d'accouplement (51a) de l'élément filtrant (51) afin d'obtenir un bouchon (100) ;
- saisir le bouchon (100) à partir du poste de pressage (5) en utilisant les moyens de manipulation robotisés (10) et placer le bouchon (100) en correspondance d'un poste de refroidissement (6) ;
- saisir le bouchon refroidi (100) à partir du poste de refroidissement (6) en utilisant les moyens de manipulation robotisés (10) et placer le bouchon (100) en correspondance d'un poste d'essai (7) ;
- essayer le bouchon (100) en mesurant des valeurs d'au moins un paramètre représentant un fonctionnement correct du même bouchon (100),
dans lequel, avant de placer le corps de support (50) dans le poste de pressage (5), pour chaque corps de support (50), une ligne (57) de matière plastique liquide est distribuée sur une paroi de fond d'une chambre annulaire formée par le corps de support (50) et conçue pour recevoir une partie d'accouplement (51a) d'un élément filtrant (51) correspondant à l'intersection entre ladite paroi de fond et au moins une des parois annulaires latérales délimitant ladite chambre annulaire.

12. Procédé selon la revendication 11, dans lequel l'étape consistant à essayer le bouchon (100) est divisée en une première sous-étape de vérification de la résistance mécanique du bouchon (100) par l'application d'un moment de flexion et une seconde sous-étape de vérification de la capacité effective d'élimination des gaz dans le bouchon en pompant un gaz dans une chambre interne (54) dans le bouchon (100).

13. Procédé selon la revendication 11 ou 12, dans lequel les première et seconde sous-étapes de vérification sont effectuées dans des sous-postes respectifs ; le procédé comprenant aussi une étape consistant à transporter automatiquement chaque bouchon entre les sous-postes en utilisant un chariot automatique (40).

14. Procédé selon l'une quelconque des revendications de 11 à 13, dans lequel entre l'étape consistant à saisir le corps de support (50), l'élément filtrant (51) ou le bouchon (100) à partir d'un poste et l'étape consistant à placer le corps de support (50), l'élément filtrant (51) ou le bouchon (100) en correspondance du poste suivant, se trouve une étape consistant à transporter en rotation le corps de support (50), l'élément filtrant (51) ou le bouchon (100) en utilisant les moyens de manipulation robotisés (10).
